# EUROPÄISCHE PATENTSCHRIFT

(11) **EP 2 642 636 B1**
(45) Veröffentlichungstag und Bekanntmachung des Hinweises auf die Patenterteilung: **15.01.2020**
(21) Anmeldenummer: 12001971.6
(22) Anmeldetag: 21.03.2012
(51) Int. Cl.: H02K 3/04, H02K 3/47, H02K 3/28

(54) **Hohlzylindrische eisenlose Wicklung**
Hollow cylinder iron-free coil
Enroulement cylindrique creux non ferreux

(43) Veröffentlichungstag der Anmeldung: 25.09.2013
(73) Patentinhaber: Lakeview Innovation Ltd., 6374 Buochs (CH)
(72) Erfinder: Fölmli, Franz-Xaver, 6370 Oberdorf (CH); Schulze, Jens, 6074 Giswil (CH); Pittini, Raniero, 6052 Hergiswil (CH)
(74) Vertreter: Grünecker Patent- und Rechtsanwälte PartG mbB

(56) Entgegenhaltungen:
- EP-A1- 1 780 871
- EP-A2- 0 150 070
- EP-A2- 1 073 179
- EP-A2- 2 026 450
- DE-A1- 2 511 567
- US-A1- 2010 295 385

## Beschreibung

Die vorliegende Erfindung betrifft eine hohlzylindrische eisenlose Wicklung für einen Elektromotor nach dem Oberbegriff des unabhängigen Anspruchs 1.

Aus dem Stand der Technik sind hohlzylindrische eisenlose Wicklungen für Elektromotoren bekannt, die aus einer Vielzahl von Einzelspulen bestehen, die über den Umfang der hohlzylindrischen Wicklung verteilt sind und einander dachziegelartig überlappen. Jede Einzelspule ist aus Draht aufgewickelt und umfasst mehrere Windungen. Charakteristisch für hohlzylindrische eisenlose Wicklungen ist, dass die Spulen der Wicklung nicht auf einen genuteten Eisenträger aufgewickelt, sondern selbsttragend ausgeführt sind. Häufig sind die Spulen aus Backlackdraht aufgewickelt. Dadurch können die einzelnen Windungen der Einzelspulen nach dem Wickelvorgang miteinander verbacken werden, wodurch den Spulen und damit der gesamten Wicklung zusätzliche Stabilität verliehen wird.

Derartige hohlzylindrische eisenlose Wicklungen werden sowohl im Rotor kleiner mechanisch kommutierter Elektromotoren als auch im Stator elektronisch kommutierter Elektromotoren verwendet. Mechanisch kommutierte Gleichstrommotoren mit eisenloser hohlzylindrischer Wicklung sind auch als Glockenankermotoren bzw. als Elektromotoren mit eisenlosem Läufer bekannt. Elektronisch kommutierte Motoren mit hohlzylindrischer eisenloser Statorwicklung nennt man auch nutlose Motoren bzw. EC-Motoren.

Zu den Vorteilen derartiger Elektromotoren zählen hoher Wirkungsgrad, Rastmomentfreiheit und lineare Regeleigenschaften.

Aus US 5294855 ist ein Verfahren zur Herstellung einer hohlzylindrischen eisenlosen Wicklung bekannt, deren Einzelspulen über den Umfang der Wicklung verteilt sind und einander dachziegelartig überlappen. Das Verfahren eignet sich ausschließlich zur Herstellung einer Wicklung, bei der die Windungen der Einzelspulen parallel gegeneinander versetzt sind. Eine eisenlose Wicklung, deren Einzelspulen zu insgesamt drei Phasenwicklungen zusammengefasst sind, welche jeweils aus einem einzigen durchgehenden Draht gefertigt sind, ist aus DE 2511567 A1 bekannt.

Aus DE 10 2005 051059 A1 ist eine hohlzylindrische eisenlose Wicklung der eingangs genannten Art bekannt. Bei dieser Wicklung sind die Windungen jeder Einzelspule spiralförmig um eine Wicklungsachse gewickelt, die senkrecht auf der Achse der hohlzylindrischen Wicklung steht. Gegenüber der aus US 5294855 bekannten Wicklung mit parallel gegeneinander versetzten Windungen bietet diese Ausführung insbesondere den Vorteil, dass der Wicklungsraum optimal ausgenutzt wird. Durch die spiralförmige Wicklung wird daher eine optimierte Leistungsdichte erreicht. Die Einzelspulen der aus DE 10 2005 051059 A1 bekannten hohlzylindrischen Wicklung sind jeweils aus einem separaten Draht aufgewickelt. Die Drahtenden jeder Einzelspule sind aus der Wicklung herausgeführt und müssen separat kontaktiert werden. Es ist beschrieben, dass die Einzelspulen aufgrund der gewünschten Präzision und Formgebung separat gefertigt werden. Um die Kontaktierung zu erleichtern, können die Drahtenden benachbarter Einzelspulen miteinander verdrillt werden.

Es ist Aufgabe der vorliegenden Erfindung, die hohlzylindrische eisenlose Wicklung der eingangs genannten Art derart zu verbessern, dass eine weiter erleichterte Kontaktierung möglich ist und die Ausfallwahrscheinlichkeit der Einzelspulen möglichst gering ist. Es ist ferner Aufgabe der vorliegenden Erfindung, eine hohlzylindrische eisenlose Wicklung der eingangs genannten Art anzugeben, die eine möglichst einfache und schnelle Herstellung hochpoliger Elektromotoren erlaubt.

Die Aufgabe wird gelöst durch die Merkmale des unabhängigen Anspruchs 1.

Die Erfindung bietet den Vorteil, dass nicht jede Spule der Wicklung einzeln kontaktiert werden muss. Die Kontaktierung der Wicklung gestaltet sich somit einfacher und kostengünstiger. Gegenüber Wicklungen mit Einzelspulen, deren Drahtenden miteinander verdrillt sind, besteht bei der erfindungsgemäßen Lösung eine weitaus geringere Ausfallwahrscheinlichkeit der Einzelspulen. Jede Verdrillung birgt nämlich die Gefahr, dass sich die verdrillten Drahtenden voneinander lösen oder dass beispielsweise aufgrund von Korrosion mit der Zeit ein erhöhter Übergangswiderstand zwischen den Drahtenden auftritt. Die erfindungsgemäße hohlzylindrische eisenlose Wicklung eignet sich daher besonders zur Herstellung hochpoliger Elektromotoren, die bekanntermaßen eine Vielzahl von Einzelspulen aufweisen.

Die Wicklungsanschlüsse der Phasenwicklungen können in Stern- oder Dreiecksanordnung verschaltet werden. Zur Verschaltung kann eine Leiterplatte vorgesehen sein. Bei der erfindungsgemäßen Wicklung ist die Anzahl der zu kontaktierenden Wicklungsanschlüsse gemessen an der Anzahl der enthaltenen Einzelspulen gering, weshalb die Leiterplatte im Vergleich zu herkömmlichen Ausführungen sehr klein gehalten werden kann. Durch die geringe Anzahl der Wicklungsanschlüsse kann auch vollständig auf eine Leiterplatte verzichtet werden. Mit der erfindungsgemäßen Wicklung reduzieren sich daher sowohl die Komplexität der Herstellung als auch die Kosten der mit der Wicklung bestückten Elektromotoren. Sofern keine Leiterplatte vorgesehen ist, können die Wicklungsanschlüsse direkt miteinander und/oder direkt mit den Motoranschlüssen verbunden werden. Vorzugsweise werden die Verbindungen mittels Verlöten hergestellt.

Vorteilhafte Ausgestaltungen der vorliegenden Erfindung sind Gegenstand der Unteransprüche.

In einer besonders bevorzugten Ausführungsform der vorliegenden Erfindung verlaufen Verbindungsabschnitte des durchgehenden Drahtes zwischen aufeinander folgenden Einzelspulen einer Phasenwicklung in Bezug auf die Achse der hohlzylindrischen Wicklung radial versetzt zu den Einzelspulen. Dies ermöglicht, dass die einzelnen Phasenwicklungen der hohlzylindrischen Wicklung ineinander gesetzt werden können. Die Phasenwicklungen können somit äußerst präzise einzeln gefertigt werden und lassen sich anschließend zu einem Wicklungsverbund zusammenfügen. Ganz besonders bevorzugt verlaufen diese Verbindungsabschnitte zwischen aufeinander folgenden Einzelspulen einer Phasenwicklung radial innerhalb der durch die Einzelspulen gebildeten hohlzylindrischen Wicklung. So wird eine äußerst kompakte Wicklung erreicht.

Weiter besonders bevorzugt läuft der Draht dabei zwischen zwei aufeinander folgenden Einzelspulen der Phasenwicklung ausgehend von diesen beiden Einzelspulen an einem axialen Ende der hohlzylindrischen Wicklung zunächst jeweils auf die Achse der hohlzylindrischen Wicklung zu und verläuft anschließend zwischen den beiden Spulen radial beabstandet von der Innenseite der Wicklung. Dies begünstigt das Einsetzen der Spulen einer ersten Phasenwicklung zwischen die Spulen einer zweiten Phasenwicklung. So können die Einzelspulen beim Ineinandersetzen der Phasenwicklungen leicht ausweichen bzw. in sich verdreht werden. Es ist nicht zwingend erforderlich, dass der Draht ausgehend von den Einzelspulen direkt auf die Achse der Wicklung zuläuft. Vorzugsweise verläuft der Draht in diesem auf die Achse zulaufenden Abschnitt jedoch zumindest parallel zur Wicklungsachse der jeweiligen Einzelspule.

Weiter besonders bevorzugt verlaufen dabei die Verbindungsabschnitte der zweiten Phasenwicklung in Richtung der Achse der hohlzylindrischen Wicklung versetzt zu den Verbindungsabschnitten der ersten Phasenwicklung. So können die Spulen der verschiedenen Phasenwicklungen vollständig ineinandergesetzt werden. Beispielsweise können die Verbindungsabschnitte zwischen den Spulen einer ersten Phasenwicklung direkt am axialen Ende der hohlzylindrischen Wicklung verlaufen, wohingegen der Draht bei der zweiten Phasenwicklung an jeder Spule zunächst ein kleines Stück weit axial aus der hohlzylindrischen Wicklung herausgeführt wird. Bei jeder zusätzlich vorgesehenen Phasenwicklung muss der Draht an den Enden der Verbindungsabschnitte ein zusätzliches Stück weiter axial herausgeführt werden.

Weiter kann vorgesehen sein, dass die Verbindungsabschnitte zwischen aufeinanderfolgenden Einzelspulen der ersten Phasenwicklung und die Verbindungsabschnitte zwischen aufeinanderfolgenden Einzelspulen der zweiten Phasenwicklung an unterschiedlichen axialen Enden der hohlzylindrischen Wicklung angeordnet sind. Auch bei dieser Ausführungsform können die Spulen zweier unterschiedlicher Phasenwicklungen besonders einfach ineinandergesetzt werden. Diese Ausführungsform eignet sich besonders, falls lediglich zwei unterschiedliche Phasenwicklungen vorgesehen sind.

In einer weiteren besonders bevorzugten Ausführungsform der vorliegenden Erfindung umfasst die Wicklung drei Phasenwicklungen. Diese Ausführungsform eignet sich besonders bei elektronisch kommutierten Elektromotoren mit mehr als zwei Rotorpolen. Beispielsweise kann der Rotor dabei zwischen 4 und 32 Rotorpole aufweisen.

Erfindungsgemäß weisen die Einzelspulen einen ersten Abschnitt und einen zweiten Abschnitt auf, wobei zwischen erstem Abschnitt und zweitem Abschnitt in Bezug auf die Achse der hohlzylindrischen Wicklung ein radialer Versatz besteht, und wobei die dachziegelartige Überlappung erreicht wird, indem der zweite Abschnitt einer Spule auf dem ersten Abschnitt einer benachbarten Einzelspule zu liegen kommt. Dadurch wird eine äußerst kompakte Bauweise erzielt. Die beiden Abschnitte liegen dabei vorzugsweise jeweils in einer Zylinderfläche um die Achse der hohlzylindrischen Wicklung. Die Zylinderfläche des zweiten Abschnitts hat dabei einen größeren Radius, verläuft also in einem größeren Abstand von der Achse der hohlzylindrischen Wicklung, als die Zylinderfläche des ersten Abschnitts. Die Windungen der Einzelspule verlaufen dabei zur Hälfte jeweils parallel zueinander in der ersten Zylinderfläche und zur anderen Hälfte in der zweiten Zylinderfläche. Am Versatz findet ein Sprung in die höhere bzw. tiefere Zylinderfläche statt.

Bevorzugt weisen die Windungen einer Einzelspule im Bereich des Versatzes dabei eine Ausbuchtung auf. Durch die Ausbuchtung wird sichergestellt, dass genügend Drahtlänge für die Bildung des Versatzes zur Verfügung steht. Der Versatz kann daher nach dem Wickelvorgang erzeugt werden, ohne dass die Gefahr besteht, dass der Draht im Bereich des Versatzes beschädigt wird oder gar reißt. Bei der Ausbuchtung im Bereich des Versatzes kann es sich bevorzugt um eine haarnadelförmige bzw. schlaufenförmige Ausbuchtung handeln.

In einer weiteren bevorzugten Ausführungsform der vorliegenden Erfindung ist die Projektion der Grundform der Windungen einer Einzelspule in einer senkrecht zur Wicklungsachse stehenden Ebene hexagonal oder rautenförmig. Dadurch wird eine optimale Ausnutzung des zur Verfügung stehenden Wicklungsraums erreicht. Andere Grundformen, insbesondere die aus DE 10 2005 051059 A1 bekannten Grundformen, sind ebenfalls möglich.

In einer weiteren bevorzugten Ausführungsform der vorliegenden Erfindung sind die Phasenwicklungen aus einem Litzendraht gewickelt. Ein Litzendraht bietet den Vorteil, dass der Draht äußerst flexibel ist und zerstörungsfrei auch in sehr kleinen Radien gewickelt werden kann. Zudem können die vorgefertigten Phasenwicklungen dadurch zerstörungsfrei ineinander gesetzt werden. Die aufgrund des Litzendrahts erreichte Flexibilität ermöglicht auch leichte Verformungen der Phasenwicklungen, die beim Ineinandersetzen der Phasenwicklungen eventuell erforderlich werden. Jedoch können auch andere Drähte zur Herstellung der Phasenwicklung verwendet werden. Besonders bevorzugt kommen Drähte mit rechteckigem Drahtquerschnitt zum Einsatz. Dadurch wird eine bessere Raumausnutzung erreicht. Falls der Draht als Backlackdraht ausgeführt ist, kann die Wicklung nach deren Herstellung zudem verbacken werden, wodurch die Stabilität der Wicklung erhöht wird.

In einer weiteren Ausführungsform der vorliegenden Erfindung sind aufeinanderfolgende Spulen einer Phasenwicklung gegenläufig gewickelt. Dadurch kann bei bestimmten Wicklungskonstellationen eine günstige Überlagerung der durch die Wicklung erzeugten Magnetfelder erzielt werden.

Die Erfindung stellt ferner einen Elektromotor mit einem Rotor und mit einem Stator bereit, wobei der Elektromotor als elektronisch kommutierter Elektromotor ausgeführt ist, und der Stator eine erfindungsgemäße hohlzylindrische Wicklung umfasst. Die erfindungsgemäße hohlzylindrische Wicklung eignet sich ganz besonders bei elektronisch kommutierten Elektromotoren.

Ein Ausführungsbeispiel der vorliegenden Erfindung wird im Folgenden anhand von Zeichnungen näher erläutert. Es zeigen:
- **Fig. 1**: eine erfindungsgemäße hohlzylindrische eisenlose Wicklung in Schrägansicht,
- **Fig. 2**: die erfindungsgemäße Wicklung aus Figur 1 in der Draufsicht,
- **Fig. 3**: eine Phasenwicklung der erfindungsgemäßen hohlzylindrischen Wicklung aus den Figuren 1 und 2 in Schrägansicht,
- **Fig. 4**: die Phasenwicklung aus Figur 3 in einer Draufsicht,
- **Fig. 5**: die Phasenwicklung aus den Figuren 3 und 4 vor der endgültigen Fertigstellung in einer Seitenansicht, und
- **Fig. 6**: eine schematische Darstellung einer Einzelspule der in Figur 5 gezeigten Phasenwicklung.

Für die folgenden Ausführungen gilt, dass gleiche Teile durch gleiche Bezugszeichen bezeichnet sind. Sofern in einer Zeichnung Bezugszeichen enthalten sind, die in der zugehörigen Figurenbeschreibung nicht ausdrücklich erwähnt sind, so wird auf vorangehende oder nachfolgende Figurenbeschreibungen Bezug genommen.

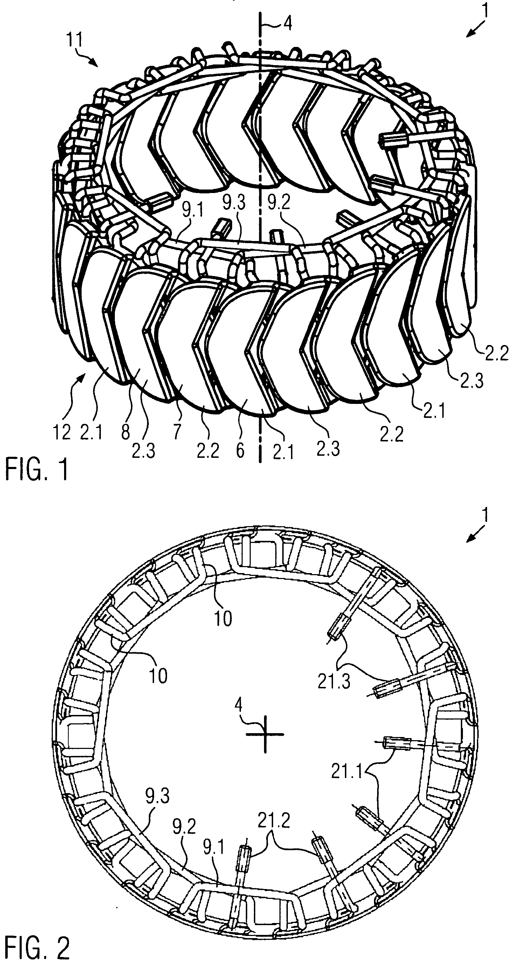

Die **Figuren 1 und 2** zeigen verschiedene Ansichten einer erfindungsgemäßen hohlzylindrischen eisenlosen Wicklung 1. In **Figur 1** sind die Achse 4 sowie das obere axiale Ende 11 und das untere axiale Ende 12 der erfindungsgemäßen Wicklung 1 zu erkennen. Die erfindungsgemäße Wicklung 1 ist im Wesentlichen aus einer Vielzahl von Einzelspulen 2.1, 2.2 und 2.3 zusammengesetzt. Die Einzelspulen sind über den Umfang der Wicklung 1 verteilt, wobei aufeinanderfolgende Einzelspulen sich dabei jeweils dachziegelartig überlappen.

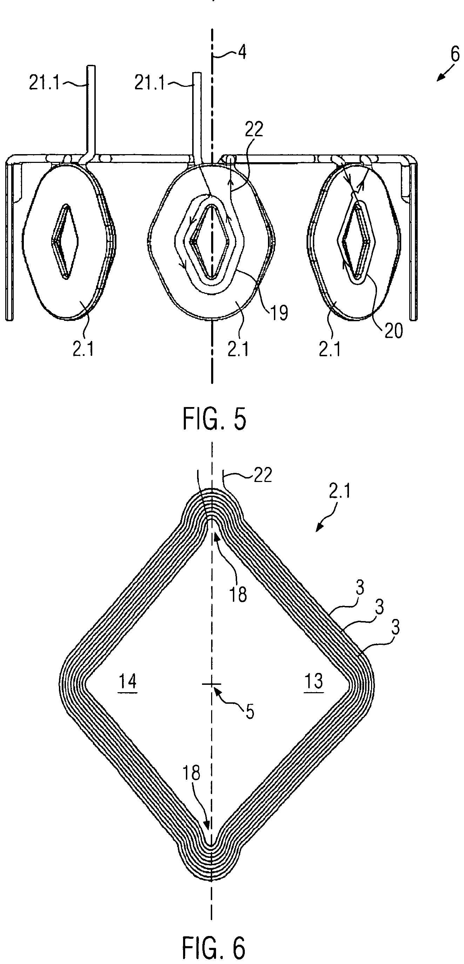

Wie insbesondere in den **Figuren 5 und 6** zu erkennen ist, sind die Einzelspulen der erfindungsgemäßen Wicklung 1 aus einem Litzendraht 22 spiralförmig um die in **Figur 6** dargestellte Wicklungsachse 5 gewickelt. Die Wicklungsachse 5 jeder der Einzelspulen steht senkrecht auf der Achse 4 der erfindungsgemäßen hohlzylindrischen Wicklung 1.

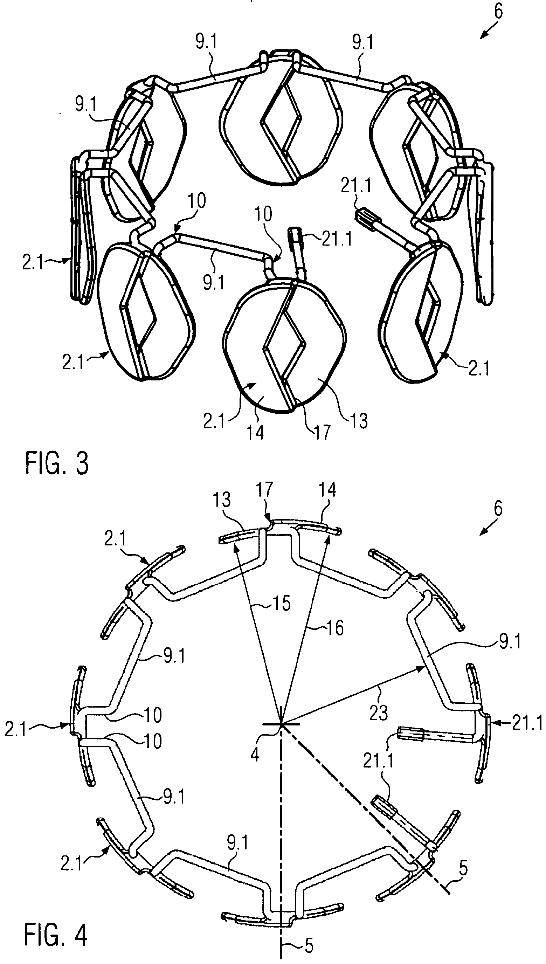

Die Einzelspulen der erfindungsgemäßen hohlzylindrischen Wicklung sind zu drei sogenannten Phasenwicklungen 6, 7 und 8 zusammengefasst. Die erste Phasenwicklung 6 ist in **Figur 3** dargestellt. Wie **Figur 3** zeigt, ist jede der drei Phasenwicklungen 6, 7 und 8 aus einem durchgehenden Litzendraht aufgewickelt. Die Einzelspulen 2.1 der in **Figur 3** gezeigten ersten Phasenwicklung 6 sind jeweils über einen Verbindungsabschnitt 9.1 des durchgehenden Litzendrahtes miteinander verbunden. Die Enden des Litzendrahts bilden die beiden Wicklungsanschlüsse 21.1 der Phasenwicklung 6. Die in **Figur 1** gezeigten beiden anderen Phasenwicklungen 7 und 8 sind im Wesentlichen genauso aufgebaut wie die Phasenwicklung 6. Jedoch sind die drei Phasenwicklungen 6, 7 und 8 in Umfangsrichtung der hohlzylindrischen Wicklung 1 gegeneinander versetzt, so dass die Einzelspulen der drei Phasenwicklungen jeweils abwechselnd aufeinander folgen. In **Figur 1** ist deutlich zu erkennen, dass auf eine Einzelspule 2.1 der ersten Phasenwicklung 6 eine Einzelspule 2.2 der zweiten Phasenwicklung 7, und auf diese eine Einzelspule 2.3 der dritten Phasenwicklung 8 folgt. Dieses Muster wiederholt sich über den Umfang der hohizylindrischen Wicklung 1 acht Mal, da jede der drei Phasenwicklungen 6, 7 und 8 jeweils acht Einzelspulen umfasst.

Wie **Figur 2** zeigt, sind auch die Anschlüsse der drei Phasenwicklungen jeweils auf unterschiedlichen Positionen in Umfangsrichtung der hohlzylindrischen Wicklung 1 angeordnet. Die Anschlüsse der zweiten Phasenwicklung 7 sind in **Figur 2** mit dem Bezugszeichen 21.2 bezeichnet, die Anschlüsse der dritten Phasenwicklung 8 mit dem Bezugszeichen 21.3.

Damit die drei Phasenwicklungen 6, 7 und 8, wie in **Figur 1** gezeigt, ineinander gesetzt werden können, müssen die Verbindungsabschnitte des Litzendrahts zwischen den Einzeispulen der Phasenwicklungen geeignet ausgebildet sein. Wie **Figur 1** zeigt, sind sämtliche Verbindungsabschnitte 9.1, 9.2 und 9.3 der drei Phasenwicklungen am oberen axialen Ende 11 der hohlzylindrischen Wicklung 1 angeordnet. Sämtliche Verbindungsabschnitte sind jedoch in radialer Richtung in Bezug auf den Innendurchmesser der hohlzylindrischen Wicklung 1 nach innen versetzt. Deutlich zu erkennen ist dies beispielsweise in **Figur 4**, die eine Draufsicht auf die erste Phasenwicklung 6 zeigt. Der Radius der Innenwand der hohlzylindrischen Wicklung ist in dieser Darstellung mit dem Bezugszeichen 15 bezeichnet. Die Verbindungsabschnitte 9.1 der ersten Phasenwicklung 6 verlaufen beabstandet von dieser Wand und sind somit ein wenig zur Achse 4 der hohlzylindrischen Wicklung hin versetzt. Um diesen Versatz zu erreichen, läuft der Litzendraht sowohl am Anfang als auch am Ende jeder der Einzelspulen 2.1 ausgehend vom oberen axialen Ende 11 zunächst ein Stück auf die Achse 4 der hohlzylindrischen Wicklung zu. Dieses den radialen Versatz der Verbindungsabschnitte 9.1 ermöglichende Stück des Litzendrahts ist in den **Figuren 3 und 4** mit dem Bezugszeichen 10 bezeichnet.

Es wird darauf hingewiesen, dass das Stück 10 des Litzendrahts nicht unbedingt direkt auf die Achse 4 zulaufen muss. Vorteilhafterweise verläuft der Litzendraht in diesem Abschnitt allerdings zumindest parallel zur Wicklungsachse 5 der jeweiligen Einzelspule 2.1. So ist sichergestellt, dass ausreichend Platz vorhanden ist, um die beiden anderen Phasenwicklungen 7 und 8 in die erste Phasenwicklung 6 einzusetzen. Wie **Figur 4** zeigt, verlaufen die Verbindungsabschnitte 9.1 der ersten Phasenwicklung 6 tangential zu einem gedachten inneren Zylinder mit dem Radius 23, welcher kleiner ist, als der innere Radius 15 der hohlzylindrischen Wicklung. Anstatt des tangentialen Verlaufs der Verbindungsabschnitte 9.1 ist auch denkbar, dass die Verbindungsabschnitte 9.1 entlang einer Kreisbahn mit dem Radius 23 verlaufen.

In den **Figuren 1 und 2** ist zu erkennen, dass die Verbindungsabschnitte 9.2 der zweiten Phasenwicklung 7 in axialer Richtung der hohlzylindrischen Wicklung 1 über den Verbindungsabschnitten 9.1 der ersten Phasenwicklung 6 verlaufen. Die Verbindungsabschnitte 9.3 der dritten Phasenwicklung 8 schließlich verlaufen auch oberhalb der Verbindungsabschnitte 9.2 der zweiten Phasenwicklung 7. Der Litzendraht ist bei den beiden Phasenwicklungen 7 und 8 daher jeweils am Anfang und am Ende der Einzelspulen unterschiedlich weit in axialer Richtung nach oben herausgeführt, bevor er auf die Achse 4 der hohlzylindrischen Wicklung zuläuft. Ansonsten entspricht die Anordnung der Verbindungsabschnitte 9.2 und 9.3 der zweiten und dritten Phasenwicklung der Anordnung der Verbindungsabschnitte 9.1 der ersten Phasenwicklung 6.

**Figur 6** zeigt eine schematische Ansicht des Wicklungsverlaufs einer Einzelspule der erfindungsgemäßen hohlzylindrischen Wicklung. Der Litzendraht 22 ist spiralförmig in mehreren Windungen 3 um die Wicklungsachse 5 der Einzelspule 2.1 gewickelt, wobei die Grundform der Windungen einer Rautenform entspricht. Wie **Figur 6** zeigt, verlaufen die Windungen 3 parallel nebeneinander. Die **Figuren 3 und 4** zeigen, dass jede Spule einen ersten Abschnitt 13 und einen zweiten Abschnitt 14 umfasst, wobei zwischen diesen beiden Abschnitten in Bezug auf die Achse 4 der hohlzylindrischen Wicklung ein radialer Versatz 17 besteht. Die Windungen 3 der Einzelspulen verlaufen dabei jeweils zur Hälfte in dem ersten Abschnitt 13 und zur anderen Hälfte im zweiten Abschnitt 14. Der erste Abschnitt 13 liegt in einer Zylinderfläche mit dem in **Figur 4** gezeigten kleineren Radius 15 um die Achse 4 der hohlzylindrischen Wicklung, der zweite Abschnitt 14 hingegen liegt in einer Zylinderfläche mit einem etwas größeren Radius 16 um die Achse 4 der hohlzylindrischen Wicklung. Diese Ausgestaltung der Einzelspulen ermöglicht die in **Figur 1** dargestellte dachziegelartige Überlappung. Der zweite Abschnitt 14 einer Einzelspule 2.1 der ersten Phasenwicklung 6 liegt somit auf dem ersten Abschnitt 13 einer Spule 2.2 der zweiten Phasenwicklung 7 auf. Dieselbe Konstellation ergibt sich zwischen den Spulen 2.2 der zweiten Phasenwicklung 7 und den Spulen 2.3 der dritten Phasenwicklung 8.

**Figur 5** zeigt die erste Phasenwicklung 6 als Halberzeugnis. Die Einzelspulen 2.1 wurden in einer Ebene aufgewickelt, so dass die Windungen der Einzelspulen jeweils in einer flachen Ebene verlaufen. Die Einzelspulen 2.1 weisen daher weder den in den **Figuren 3** und 4 gezeigten Versatz 17 auf, noch sind rechter und linker Abschnitt gekrümmt, so dass die Windungen in einer Zylinderfläche liegen. **Figur 5** zeigt zudem eine Ausführungsform mit gegenläufigem Wicklungssinn zweier aufeinanderfolgender Einzelspulen 2.1. Die in der Bildmitte gezeigte Einzelspule ist in Wicklungsrichtung 19 gegen den Uhrzeigersinn gewickelt, die rechts daneben gezeigte Einzelspule in gegenläufiger Richtung 20 im Uhrzeigersinn. Die gegenläufige Wicklung kann bei speziellen Wicklungsanordnungen von Vorteil sein. Die Einzelspulen können jedoch auch alle in derselben Wicklungsrichtung gewickelt sein. Damit der in den **Figuren 3 und 4** gezeigte erforderliche Versatz 17 erzeugt werden kann, ohne den Litzendraht dabei zu beschädigen, weisen die Windungen 3 der Einzelspule im Bereich des Versatzes die in **Figur 6** gezeigte haarnadelförmige Ausbuchtung 18 auf. Durch die Ausbuchtung 18 ist sichergestellt, dass im Bereich des zu erzeugenden Versatzes genügend Drahtlänge vorhanden ist.

## Patentansprüche

1. Hohlzylindrische eisenlose Wicklung (1) für einen Elektromotor, umfassend eine Vielzahl von Einzelspulen (2.1, 2.2, 2.3), die über den Umfang der Wicklung (1) verteilt angeordnet sind, wobei jede Einzelspule (2.1, 2.2, 2.3) eine Vielzahl von Windungen (3) umfasst, die spiralförmig um eine senkrecht auf eine Achse (4) der Wicklung (1) stehende Wicklungsachse (5) gewickelt sind, und wobei sich aufeinanderfolgende Einzelspulen (2.1, 2.2, 2.3) dachziegelartig überlappen, wobei die Wicklung (1) zumindest zwei Phasenwicklungen (6, 7, 8) umfasst, wobei jede der Phasenwicklungen (6, 7, 8) aus mehreren der Einzelspulen (2.1, 2.2, 2.3) besteht, wobei die Phasenwicklungen (6, 7, 8) ferner in Umfangsrichtung der hohlzylindrischen Wicklung (1) gegeneinander versetzt sind, so dass die Einzelspulen (2.1) einer ersten Phasenwicklung (6) in Umfangsrichtung der hohlzylindrischen Wicklung (1) zwischen den Einzelspulen (2.2) einer zweiten Phasenwicklung (7) angeordnet sind, wobei die Einzelspulen (2.1, 2.2, 2.3) einen ersten Abschnitt (13) und einen zweiten Abschnitt (14) aufweisen, wobei zwischen erstem Abschnitt (13) und zweitem Abschnitt (14) in Bezug auf die Achse (4) der hohlzylindrischen Wicklung (1) ein radialer Versatz (17) besteht, wobei die Windungen (3) der Einzelspulen (2.1, 2.2, 2.3) jeweils zur Hälfte in dem ersten Abschnitt (13) und zur anderen Hälfte in dem zweiten Abschnitt (14) verlaufen, und wobei die dachziegelartige Überlappung erreicht wird, indem der zweite Abschnitt (14) einer Einzelspule (2.1, 2.2, 2.3) auf dem ersten Abschnitt (13) einer benachbarten Einzelspule (2.1, 2.2, 2.3) der hohlzylindrischen Wicklung (1) zu liegen kommt, **dadurch gekennzeichnet, dass** jede der Phasenwicklungen (6, 7, 8) aus einem durchgehenden Draht (22) gewickelt ist.

2. Wicklung (1) nach Anspruch 1, **dadurch gekennzeichnet, dass** Verbindungsabschnitte (9.1, 9.2, 9.3) des durchgehenden Drahtes (22) zwischen aufeinanderfolgenden Einzelspulen (2.1, 2.2, 2.3) einer Phasenwicklung (6, 7, 8) in Bezug auf die Achse (4) der hohlzylindrischen Wicklung (1) radial versetzt zu den Einzelspulen (2.1, 2.2, 2.3) verlaufen.

3. Wicklung (1) nach Anspruch 2, **dadurch gekennzeichnet, dass** der Draht (22) zwischen zwei aufeinanderfolgenden Einzelspulen (2.1, 2.2, 2.3) der Phasenwicklung (6, 7, 8) ausgehend von beiden Einzelspulen (2.1, 2.2, 2.3) an einem axialen Ende der hohlzylindrischen Wicklung (1) zunächst jeweils auf die Achse (4) der hohlzylindrischen Wicklung (1) zuläuft und anschließend radial beabstandet von der Innenseite der hohlzylindrischen Wicklung (1) verläuft.

4. Wicklung (1) nach Anspruch 2 oder 3, **dadurch gekennzeichnet, dass** die Verbindungsabschnitte (9.2) der zweiten Phasenwicklung (7) in Richtung der Achse (4) der hohlzylindrischen Wicklung (1) versetzt zu den Verbindungsabschnitten (9.1) der ersten Phasenwicklung (6, 7, 8) verlaufen.

5. Wicklung (1) nach einem der Ansprüche 1 bis 4, **dadurch gekennzeichnet, dass** die Verbindungsabschnitte (9.1) zwischen aufeinanderfolgenden Einzelspulen (2.1) der ersten Phasenwicklung (6) und die Verbindungsabschnitte (9.2) zwischen aufeinanderfolgenden Einzelspulen (2.2) der zweiten Phasenwicklung (7) an unterschiedlichen axialen Enden (11, 12) der hohlzylindrischen Wicklung (1) angeordnet sind.

6. Wicklung (1) nach einem der Ansprüche 1 bis 5, **dadurch gekennzeichnet, dass** die Wicklung (1) drei Phasenwicklungen (6, 7, 8) umfasst.

7. Wicklung (1) nach einem der Ansprüche 1 bis 6, **dadurch gekennzeichnet, dass** die Windungen (3) einer Einzelspule (2.1, 2.2, 2.3) im Bereich des Versatzes (17) eine Ausbuchtung (18) aufweisen.

8. Wicklung (1) nach einem der Ansprüche 1 bis 7, **dadurch gekennzeichnet, dass** die Projektion der Grundform der Windungen (3) einer Einzelspule (2.1, 2.2, 2.3) in einer senkrecht zur Wicklungsachse (5) stehenden Ebene hexagonal oder rautenförmig ist.

9. Wicklung (1) nach einem der Ansprüche 1 bis 8, **dadurch gekennzeichnet, dass** die Phasenwicklungen (6, 7, 8) aus einem Litzendraht (22) gewickelt sind.

10. Wicklung (1) nach einem der Ansprüche 1 bis 9, **dadurch gekennzeichnet, dass** aufeinanderfolgende Einzelspulen (2.1, 2.2, 2.3) einer Phasenwicklung (6, 7, 8) gegenläufig gewickelt sind.

11. Elektromotor mit einem Rotor und mit einem Stator, **dadurch gekennzeichnet, dass** der Elektromotor als elektronisch kommutierter Elektromotor ausgeführt ist, und der Stator eine hohlzylindrische Wicklung (1) nach einem der Ansprüche 1 bis 10 umfasst.

## Claims

1. Hollow-cylindrical coreless winding (1) for an electric motor, comprising a plurality of single coils (2.1, 2.2, 2.3) which are arranged to be distributed across the circumference of the winding (1), wherein each single coil (2.1, 2.2, 2.3) comprises a plurality of turns (3) which are spirally wound around a winding axis (5) that is perpendicular to an axis (4) of the winding (1), and wherein successive single coils (2.1, 2.2, 2.3) overlap in a roof tile manner, vherein the winding (1) comprises at least two phase windings (6, 7, 8), wherein each of the phase windings (6, 7, 8) consists of several ones of the single coils (2.1, 2.2, 2.3), wherein the phase windings (6, 7, 8) are furthermore offset with respect to each other in the circumferential direction of the hollow-cylindrical winding (1), so that the single coils (2.1) of a first phase winding (6) are arranged, in the circumferential direction of the hollow-cylindrical winding (1), between the single coils (2.2) of a second phase winding (7), wherein the single coils (2.1, 2.2, 2.3) comprise a first section (13) and a second section (14), wherein between the first section (13) and the second section (14), a radial offset (17) is provided with respect to the axis (4) of the hollow-cylindrical winding (1), and wherein the overlap in a roof tile manner is achieved by the second section (14) of a single coil (2.1, 2.2, 2.3) coming to lie on the first section (13) of an adjacent single coil (2.1, 2.2, 2.3) of the hollow-cylindrical winding (1), wherein one half of each of the turns (3) of the single coils extends in the first section 13 and the other half in the second section 14, and wherein the overlap in a roof tile manner is achieved by the second section of a single coil coming to lie on the first section of an adjacent single coil, **characterized in that** each of the phase windings (6, 7, 8) is wound from a continuous wire (22).

2. Winding (1) according to claim 1, **characterized in that** connecting sections (9.1, 9.2, 9.3) of the continuous wire (22) extend between successive single coils (2.1, 2.2, 2.3) of a phase winding (6, 7, 8) with respect to the axis (4) of the hollow-cylindrical winding (1) radially offset to the single coils (2.1, 2.2, 2.3).

3. Winding (1) according to claim 2, **characterized in that** the wire (22) extends between two successive single coils (2.1, 2.2, 2.3) of the phase winding (6, 7, 8) starting from both single coils (2.1, 2.2., 2.3) at an axial end of the hollow-cylindrical winding (1) initially each towards the axis (4) of the hollow-cylindrical winding (1) and subsequently radially at a distance from the inner side of the hollow-cylindrical winding (1).

4. Winding (1) according to claim 2 or 3, **characterized in that** the connecting sections (9.2) of the second phase winding (7) are offset to the connecting sections (9.1) of the first phase winding (6, 7, 8) in the direction of the axis (4) of the hollow-cylindrical winding (1).

5. Winding (1) according to one of claims 1 to 4, **characterized in that** the connecting sections (9.1) between successive single coils (2.1) of the first phase winding (6) and the connecting sections (9.2) between successive single coils (2.2) of the second phase winding (7) are arranged at different axial ends (11, 12) of the hollow-cylindrical winding (1).

6. Winding (1) according to one of claims 1 to 5, **characterized in that** the winding (1) comprises three phase windings (6, 7, 8).

7. Winding (1) according to one of claims 1 to 6, **characterized in that** the turns (3) of a single coil (2.1, 2.2, 2.3) have a bulging (18) in the region of the offset (17).

8. Winding (1) according to one of claims 1 to 7, **characterized in that** the projection of the basic shape of the turns (3) of a single coil (2.1, 2.2, 2.3) is hexagonal or rhombic in a plane perpendicular to the winding axis (5).

9. Winding (1) according to one of claims 1 to 8, **characterized in that** the phase windings (6, 7, 8) are wound from a stranded wire (22).

10. Winding (1) according to one of claims 1 to 9, **characterized in that** successive single coils (2.1, 2.2, 2.3) of a phase winding (6, 7, 8) are wound in opposite directions.

11. Electric motor with a rotor and a stator, **characterized in that** the electric motor is designed as electronically commutated electric motor and the stator comprises a hollow-cylindrical winding (1) according to one of claims 1 to 10.

## Revendications

1. Enroulement cylindrique creux (1), non ferreux, pour un moteur électrique, comprenant une pluralité de bobines individuelles (2.1, 2.2, 2.3), qui sont agencées de manière répartie le long de la périphérie de l'enroulement (1), enroulement cylindrique creux
dans lequel chaque bobine individuelle (2.1, 2.2, 2.3) comporte un grand nombre de spires (3), qui sont bobinées en forme de spirale autour d'un axe de bobine (5) perpendiculaire à un axe (4) de l'enroulement (1), et dans lequel des bobines individuelles (2.1, 2.2, 2.3) qui se succèdent, se chevauchent à la manière de tuiles de toiture,
dans lequel l'enroulement cylindrique creux (1) comprend au moins deux enroulements de phase (6, 7, 8),
dans lequel chacun des enroulements de phase (6, 7, 8) est constitué de plusieurs bobines individuelles (2.1, 2.2, 2.3),
dans lequel les enroulements de phase (6, 7, 8) sont par ailleurs décalés les uns par rapport aux autre dans la direction périphérique de l'enroulement cylindrique creux (1), de sorte que les bobines individuelles (2.1) d'un premier enroulement de phase (6) sont agencées, en se référant à la direction périphérique de l'enroulement cylindrique creux (1), entre les bobines individuelles (2.2) d'un deuxième enroulement de phase (7),
dans lequel les bobines individuelles (2.1, 2.2, 2.3) présentent un premier tronçon (13) et un deuxième tronçon (14),
dans lequel il existe entre le premier tronçon (13) et le deuxième tronçon (14), un décalage radial (17) relativement à l'axe (4) de l'enroulement cylindrique creux (1),
dans lequel les spires (3) des bobines individuelles (2.1, 2.2, 2.3) s'étendent respectivement pour moitié dans le premier tronçon (13) et pour l'autre moitié dans le deuxième tronçon (14),
et dans lequel le chevauchement à la manière de tuiles de toiture est obtenu par le fait que le deuxième tronçon (14) d'une bobine individuelle (2.1, 2.2, 2.3) vient se placer sur le premier tronçon (13) d'une bobine individuelle (2.1, 2.2, 2.3) voisine, de l'enroulement cylindrique creux (1),
**caractérisé en ce que** chacun des enroulements de phase (6, 7, 8) est bobiné en un fil continu (22).

2. Enroulement (1) selon la revendication 1, **caractérisé en ce que** des tronçons de liaison (9.1, 9.2, 9.3) du fil continu (22) entre des bobines individuelles (2.1, 2.2, 2.3) d'un enroulement de phase (6, 7, 8), s'étendent de manière décalée radialement par rapport aux bobines individuelles (2.1, 2.2, 2.3), relativement à l'axe (4) de l'enroulement cylindrique creux (1).

3. Enroulement (1) selon la revendication 2, **caractérisé en ce que** le fil (22) entre deux bobines individuelles (2.1, 2.2, 2.3), qui se succèdent, de l'enroulement de phase (6, 7, 8), s'étend à partir des deux bobines individuelles (2.1, 2.2, 2.3), à une extrémité axiale de l'enroulement cylindrique creux (1), tout d'abord respectivement en direction de l'axe (4) de l'enroulement cylindrique creux (1), et ensuite en étant radialement espacé du côté intérieur de l'enroulement cylindrique creux (1).

4. Enroulement (1) selon la revendication 2 ou la revendication 3, **caractérisé en ce que** les tronçons de liaison (9.2) du deuxième enroulement de phase (7) s'étendent, dans la direction de l'axe (4) de l'enroulement cylindrique creux (1), de manière décalée par rapport aux tronçons de liaison (9.1) du premier enroulement de phase (6, 7, 8).

5. Enroulement (1) selon l'une des revendications 1 à 4, **caractérisé en ce que** les tronçons de liaison (9.1) entre des bobines individuelles (2.1) successives du premier enroulement de phase (6), et les tronçons de liaison (9.2) entre des bobines individuelles (2.2) successives du deuxième enroulement de phase (7), sont agencés à des extrémités axiales différentes (11, 12) de l'enroulement cylindrique creux (1).

6. Enroulement (1) selon l'une des revendications 1 à 5, **caractérisé en ce que** l'enroulement (1) comprend trois enroulements de phase (6, 7, 8).

7. Enroulement (1) selon l'une des revendications 1 à 6, **caractérisé en ce que** les spires (3) d'une bobine individuelle (2.1, 2.2, 2.3) présentent, dans la zone du décalage (17), un renflement ou échancrure (18).

8. Enroulement (1) selon l'une des revendications 1 à 7, **caractérisé en ce que** la projection de la forme de base des spires (3) d'une bobine individuelle (2.1, 2.2, 2.3) dans un plan perpendiculaire à l'axe de bobine (5), présente une forme hexagonale ou une forme de losange.

9. Enroulement (1) selon l'une des revendications 1 à 8, **caractérisé en ce que** les enroulements de phase (6, 7, 8) sont bobinés en un fil souple toronné (22).

10. Enroulement (1) selon l'une des revendications 1 à 9, **caractérisé en ce que** des bobines individuelles (2.1, 2.2, 2.3) successives d'un enroulement de phase (6, 7, 8) sont bobinées en opposition.

11. Moteur électrique comprenant un rotor et un stator, **caractérisé en ce que** le moteur électrique est réalisé en tant que moteur électrique à commutation électronique, et le stator comporte un enroulement cylindrique creux (1) selon l'une des revendications 1 à 10.
